(19) **Europäisches Patentamt European Patent Office Office européen des brevets**

(11) **EP 2 161 180 B1**

(12) **EUROPEAN PATENT SPECIFICATION**

(45) Date of publication and mention of the grant of the patent:
**03.08.2011 Bulletin 2011/31**

(51) Int Cl.:
***B62D 5/06*** *(2006.01)* ***F15B 21/04*** *(2006.01)*

(21) Application number: **09168507.3**

(22) Date of filing: **24.08.2009**

(54) **Method of reducing steering instability in hydraulic power steering systems**

Verfahren zur Reduktion der Lenkinstabilität in hydraulischen Leistungslenksystemen

Procédé de réduction de l'instabilité de direction dans des systèmes de direction assistée hydraulique

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.09.2008 US 93774 P**
**17.08.2009 US 542067**

(43) Date of publication of application:
**10.03.2010 Bulletin 2010/10**

(73) Proprietor: **GM Global Technology Operations LLC**
**Detroit, MI 48265-3000 (US)**

(72) Inventor: **Beyerlein, Robert E.**
**Saginaw, MI 48603 (US)**

(74) Representative: **Manitz, Finsterwald & Partner GbR**
**Postfach 31 02 20**
**80102 München (DE)**

(56) References cited:
**WO-A1-97/38233    DE-A1- 10 015 051**
**US-A- 5 495 711**

**Description**

TECHNICAL FIELD

The subject invention relates generally to methods for reducing steering instability in hydraulic power steering systems.

BACKGROUND OF THE INVENTION

Instability in hydraulic power steering systems ("steering instability") is a common problem that can develop when integrating a hydraulic power steering system into the architecture of a vehicle. During a steering event, vehicles having steering instability may exhibit excessive noise and/or vibration when the steering system goes unstable. Steering instability is the result of undamped eigenvalues, i.e., resonances, in the open loop control response of the vehicle steering system. Steering instability typically manifests itself in either a left or a right turn. Less frequently, steering instability occurs during turns in both directions. Either way, steering instability will usually develop into a warranty issue or customer complaint if not resolved.

There have previously been multiple attempts to resolve the issue of steering instability. However, these attempts are typically vehicle specific and can have significant impact on other ride and handling attributes. These attempts have included tuning return lines, tuning supply lines, changing the steering valve gain, and vehicle changes including changes to chassis stiffness, chassis mass, tire spring rates, suspension bushings, ...etc.... Typically, such vehicle changes are beyond the control of steering system suppliers, and require the involvement of the OEM customer and/or chassis component or system suppliers.

Most prior attempts at resolving steering instability issues have been developed around the steering system itself. Within the steering system, return and supply line tuning have previously provided reliable solution methods for reducing steering instability for most situations. However, such tuning can adversely affect other steering system attributes. Tuning a supply line to reduce steering instability typically conflicts with tuning intended to address other steering system-related objectives like reducing pump noise or improving steering feel, whereas tuning a return line to reduce steering instability typically results in system packaging and/or cooling issues because the amount of steel required in the return line to adequately dissipate heat usually conflicts with the amount required to substantially reduce steering instability. Examples of prior hydraulic power steering systems are generally disclosed in U.S. Patents Nos. 5,495,711 to Kalkman et al., and 4,828,068 to Wendler et al

An improved method for addressing issues of steering instability while avoiding the above conflicts, and without requiring vehicle changes is desirable.

SUMMARY OF THE INVENTION

It is to be understood that the detailed description and specific examples discussed, while indicating preferred embodiments of the invention, are intended for purposes of illustration only and are not intended to limit the scope of the invention.

The present invention provides a method for reducing steering instability in a hydraulic power steering system for a vehicle having a pair of cylinder lines through which hydraulic fluid is conveyed in assisting turning a vehicle wheel, including the steps of determining which of said pair of cylinder lines results in less steering instability when the vehicle wheel is turned; calculating the fluid inertance of the hydraulic fluid conveyed through the cylinder line that results in less steering instability; and altering at least one dimension of the cylinder line that results in greater steering instability when the vehicle wheel is turned to substantially match the fluid inertance thereof to the calculated fluid inertance.

BRIEF DESCRIPTION OF THE DRAWINGS

Other advantages of the present invention will be readily appreciated, as the same becomes better understood by reference to the following detailed description when considered in connection with the accompanying drawings wherein:

Figure 1 is partially schematic view of a hydraulic power steering system for a vehicle, including a partially sectioned view of its steering gear assembly including a pair of left and right hand turn-assisting cylinder lines of differing lengths, each respectively associated with hydraulically assisting turning in one of the two opposite wheel turning directions;

Figure 2A is schematic view of an exemplified pair of prior cylinder lines included in the steering system of Figure 1, the cylinder lines both being in their original states (OS) and having a common diameter, the shorter, right hand cylinder line here being the one associated with the turning direction in which relatively greater steering instability results or is exhibited, and thus the longer, left hand cylinder line is designated the first cylinder line, to be emulated, and the shorter, right hand cylinder line is designated the second cylinder line, to be modified;

Figure 2B is similar to Figure 2A, except that here the longer, left hand cylinder line is the one associated with the turning direction in which relatively greater steering instability results or is exhibited, and thus the shorter, right hand cylinder line is designated the first cylinder line, to be emulated, and the longer, left hand cylinder line is designated the second cylinder line, to be modified;

Figure 3 is a schematic view of a first embodiment of an altered pair of cylinder lines including, from Figure 2A, the exemplified first cylinder line in its original state (OS) and the second cylinder line in a modified state (MS) resulting from application of the inventive method;

Figure 4 is a schematic view of a second embodiment of an altered pair of cylinder lines including, from Figure 2B, the exemplified first cylinder line in its original state (OS) and the second cylinder line in a modified state (MS) resulting from application of the inventive method;

Figure 5 is a schematic view of a third embodiment of an altered pair of cylinder lines including, from Figure 2A, the exemplified first cylinder line in its original state (OS) and the second cylinder line in a modified state (MS) resulting from application of the inventive method;

Figure 6 is a schematic view of a fourth embodiment of an altered pair of cylinder lines including, from Figure 2A, the exemplified first cylinder line in its original state (OS) and the second cylinder line in a modified state (MS) resulting from application of the inventive method; and

Figure 7 is a schematic view of a fifth embodiment of an altered pair of cylinder lines including, from Figure 2B, the exemplified first cylinder line in its original state (OS) and the second cylinder line in a modified state (MS) resulting from application of the inventive method.

Corresponding reference characters indicate corresponding parts throughout the several views. While the invention is susceptible to various modifications and alternative forms, specific embodiments thereof are shown by way of example in the drawings and may herein be described in detail. It should be understood, however, that the drawings and detailed description thereto are not intended to limit the invention to the particular forms disclosed, but on the contrary, the intention is to cover all modifications, equivalents and alternatives falling within the scope of the present invention as defined by the appended claims.

Moreover, it is to be noted that the Figures are not necessarily drawn to scale and are necessarily not drawn to the same scale. In particular, the scale of some of the elements of the Figures is greatly exaggerated to emphasize characteristics of the elements. Elements shown in more than one Figure that may be similarly configured have been indicated using the same reference numerals.

DESCRIPTION OF THE PREFERRED EMBODIMENT

The following description of preferred embodiments is merely exemplary in nature and is in no way intended to limit the invention or its uses.

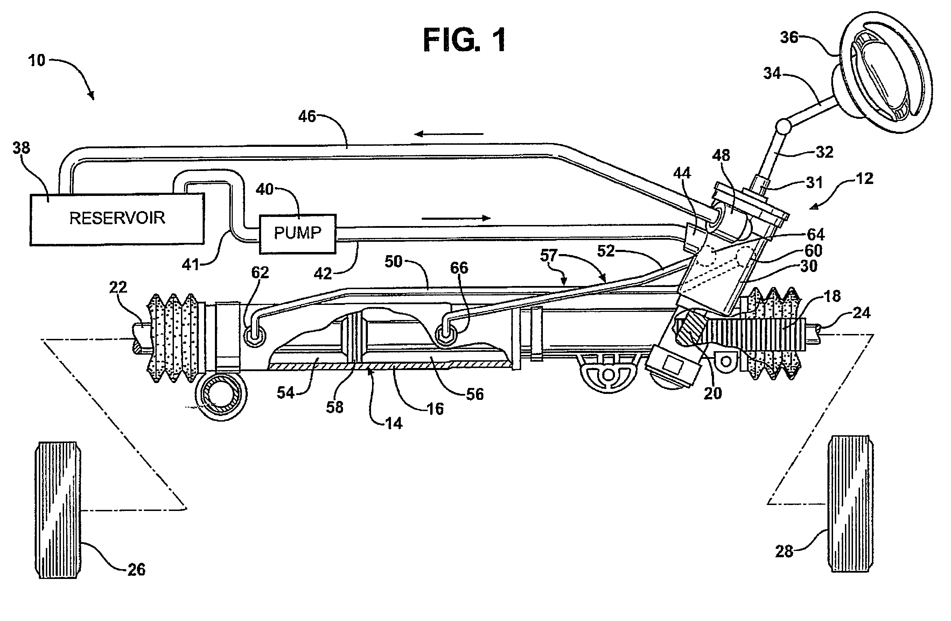

Referring to Figure 1, a hydraulic power steering system for a vehicle is shown at 10, and includes steering gear assembly 12. Gear assembly 12 includes a cylinder 14 formed in housing 16 and in which is disposed a rack 18. Pinion 20 is meshed with rack 18, which is operatively connected to a vehicle wheel. In particular, the opposite ends 22, 24 of rack 18 are each operatively connected to a respective road wheel 26, 28 to effect their turning left and right with corresponding motion of rack 18 in opposite linear directions, as is well known in the art.

Housing 16 of gear assembly 12 accommodates hydraulic steering valve 30 through which extends pinion shaft 31 rotatably fixed to pinion gear 20, with steering valve 30 actuated through rotation of the pinion. Pinion shaft 31 is rotatably fixed to one end of intermediate shaft 32, the other end of which is rotatably fixed to the rotatable shaft of steering column 34. Pivoting links may be provided at the ends of intermediate shaft 32, the length of which may be telescopically varied during operation to accommodate relative changes in position between gear assembly 12 and steering column 34. The rearward end of the shaft of steering column 34 is rotatably fixed to vehicle steering wheel 36, which is a hand wheel.

Hydraulic power steering system 10 further includes reservoir 38 and pump 40 which are in fluid communication, with substantially incompressible hydraulic power steering fluid at low pressure being provided from the outlet of reservoir 38 to the inlet of pump 40. Pump 40 is typically included in the engine's accessory drive (not shown), and reservoir 38 may be an integrated component of pump 40, or connected thereto via feed line 41 as shown. Supply line 42 carries power steering fluid at high pressure from the discharge of pump 40 to supply fitting 44 of hydraulic steering valve 30. Return line 46 extends from return fitting 48 of valve 30 to the inlet of reservoir 38. Typically, hydraulic fluid is continually circulated through the above-described circuit during engine and pump operation.

Attached to valve 30 are left hand cylinder line 50 and right hand cylinder line 52 respectively in fluid communication with left hand fluid chamber 54 and right hand fluid chamber 56 in cylinder 14. Together, the pair of cylinder lines 50, 52 is designated by reference numeral 57. High pressure fluid received by valve 30 through supply line 42 is alternatively directed to one of left and right hand lines 50, 52 as vehicle steering wheel 36 is turned in left/counterclockwise or right/clockwise direction. As used herein, the terms left hand cylinder line and left hand fluid chamber are those which high pressure fluid is conveyed through or introduced into in assisting a left hand turn of the vehicle, and conversely the right hand cylinder line and right hand fluid chamber are those which high pressure fluid is conveyed through or introduced into in assisting a right hand turn of the vehicle.

Within cylinder 14, expandable and contractible fluid chambers 54 and 56 are separated and defined by intermediate piston 58 fixed to linearly moveable rack 18. In assisting a left hand turn, for instance, fluid under pressure is supplied from valve 30 to left hand fluid chamber 54 through left hand cylinder line 50, which assists in causing chamber 54 to expand by urging piston 58, and thus rack 18, rightward as viewed in Figure 1, with rightward movement of rack 18 causing road wheels 26, 28 to correspondingly turn to the left. Simultaneously, fluid in contracting right hand fluid chamber 56, the volume of which is made smaller by the rightward movement of piston 58, is received in right hand cylinder line 52 and returned to valve 30, from which it is returned to reservoir 38.

Conversely, in assisting a right hand turn, fluid under pressure is supplied from valve 30 to right hand fluid chamber 56 through right hand cylinder line 52, which assists in causing chamber 56 to expand by urging piston 58 and rack 18 leftward as viewed in Figure 1, with leftward movement of rack 18 causing road wheels 26, 28 to correspondingly turn to the right. Simultaneously, fluid expelled from contracting left hand fluid chamber 54 is returned to valve 30 via left hand cylinder line 50, and returned to reservoir 38 via return line 46. Thus, such hydraulic power steering systems assist turning hand and/or road wheels.

The cylinder lines 50, 52 used to direct fluid between chambers 54, 56 and valve 30 during a steering event have also been shown to impact instability. The length and cross sectional flow area of each cylinder line 50, 52 control a parameter called fluid inertance (or fluid inductance).

Fluid inertance I is defined formulaically as

$$I = \rho * L \big/ A \qquad\qquad (1)$$

where $\rho$ = density of the fluid, L = length of the cylinder line, and A = cross-sectional flow area of the cylinder line.

The influence of fluid inertance is a key factor in the performance of hydraulic power steering system 10 and therefore can have a significant effect on the steering instability. Prior cylinder lines 50, 52 are typically made of a common material and have a common cross-sectional flow area or internal diameter, and by design their lengths are typically asymmetrical because of the different distances between their connections to chambers 54, 56 and steering valve 30 (see Figure 1). This results in prior cylinder lines 50, 52 producing different fluid inertances. This, in part, is a contributing factor into why some vehicles demonstrate steering instability in either right or left turns, but not both. To reduce steering instability in a hydraulic steering system 10, the present invention provides methods to substantially match the fluid inertance between the first and second cylinder lines 50, 52. Specifically, steering instability may be reduced by matching or closely matching the fluid inertance of the cylinder line associated with the objectionable steering instability to the fluid inertance of the cylinder line not associated with the objectionable steering instability.

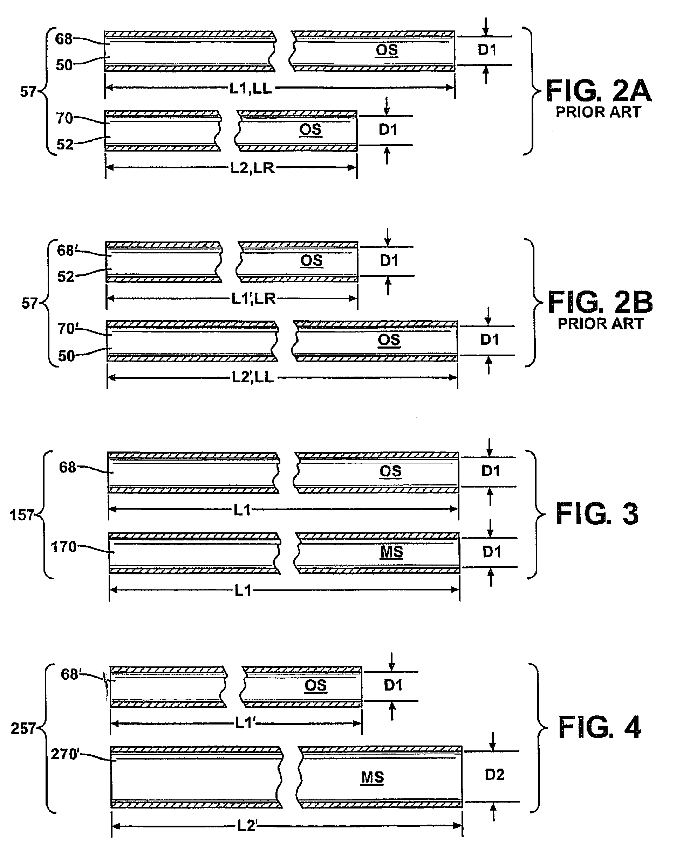

It is to be understood that the cylinder line 50, 52 associated with the relatively greater amount of resulting or exhibited steering instability could be either a left hand cylinder line 50 or a right hand cylinder line 52. Thus, of the pair of cylinder lines, the "stable" cylinder line whose fluid inertance is to be substantially matched in the other, "unstable" cylinder line may be either the longer cylinder line (for example, left hand cylinder line 50 in Figures 1 and 2A), or the shorter cylinder line (for example, right hand cylinder line 52 in Figures 1 and 2B).

Regardless of whether a left hand cylinder line 50 or a right hand cylinder line 52, the "stable" cylinder line that results in or exhibits a relatively smaller degree of steering instability, and whose fluid inertance is to be substantially matched according to the inventive method, is referred to herein as first cylinder line 68 or 68' depending, respectively, on whether it is the longer or shorter of the pair of cylinder lines in its original design or state (irrespective of whether a right or left hand cylinder line). The "unstable" cylinder line that results in or exhibits a relatively greater degree of steering instability, and which is to be modified to substantially match the fluid inertance of first cylinder line 68, 68' is referred to herein as the second cylinder line 70 or 70' depending, respectively, on whether it is the shorter or longer of the pair of cylinder lines in its original design or state (again irrespective of whether a right or left hand cylinder line). Primed reference numerals herein generally relate to cases in which the first cylinder line is the shorter and the second cylinder line is the longer of the pair.

In performing the inventive method, it is preferable that the replicated first cylinder line 68, 68' be left unaltered from its original design or state, and that the resulting cylinder line modifications are made to second cylinder line 70, 70' which in its original state is associated with the relatively greater level of resulting or exhibited steering instability. In Figures 2-7, each cylinder line that is depicted in its respective original, unaltered state is labeled OS, and each second cylinder line modified as a result of applying the inventive method is respectively labeled MS to indicate that, relative to its original configuration, it is shown in a modified state that substantially matches the fluid inertance of its respectively paired first cylinder line. In each of Figures 3-7, the paired cylinder lines produce substantially equal fluid inertances. Notably, Figures 2-7 show the cylinder lines schematically as being straight. It is to be understood, however, that each cylinder line may be configured to include bends or curves along its length as packaging considerations warrant, and that dimension L is associated with distance along the length of the cylinder line however configured, rather than a distance extending directly between two points. It is envisioned that the altered pair of cylinder lines may be included in steering gear assembly 12 supplied by a steering system vendor to its OEM customer.

One embodiment of the inventive method involves equalizing the fluid inertances of the cylinder lines by modifying the length of the cylinder line 50, 52 through which high pressure fluid is conveyed from valve 30 to its respective cylinder fluid chamber 54, 56 in assisting a left or right hand turn and is associated with the steering direction that results in or exhibits a relatively greater level of steering instability (the "unstable" line), to match the length of the cylinder line 50, 52 associated with the other steering direction that results in or exhibits relatively less steering instability (the "stable" line). This length-altering approach, in which the cross sectional flow area of the cylinder lines remain substantially unaltered, is preferably applied to a pair of cylinder lines in which the shorter original state cylinder line is the "unstable" or second cylinder line associated with the steering direction resulting in or exhibiting a relatively greater degree of steering instability.

Referring to Figures 1 and 2, right hand cylinder line 52 has overall length LR that is shorter than overall length LL of left hand cylinder line 50. That is, length LR of right hand cylinder line 52 is less than length LL of left hand cylinder line 50. Ordinarily, cylinder lines 50 and 52 are made of identical tubing material, and along their entire lengths have an identical cross-sectional shape and size, such as having a common first flow area or first inner diameter D1 as shown.

With reference to Figure 2A, in the case where the steering instability is found in the steering direction associated with the shorter, right hand cylinder line 52, 70, second line length L2 of the second or right hand cylinder line 52, 70 is extended to match length L1 (which may be overall length LL) of the first or left hand cylinder line 50, 68, their common first flow areas or inner diameters D1 remaining unaltered from their original states, as shown in Figure 3, wherein the resulting first embodiment altered pair of cylinder lines 157 includes modified second cylinder line 170 which produces substantially the same fluid inertance as that of its paired first cylinder line 68.

With reference to Figure 2B, however, in the case where second cylinder line 70' is longer, left hand cylinder line 50, it may not be possible to reduce its overall, second line length L2', LL to match shorter overall length L1', LR of first, right hand cylinder line 52, 68'. Therefore, application of the inventive method in such a situation may involve instead changing the cross-sectional flow area of one or both of the cylinder lines 50, 52 as described further below.

Increasing the cross-sectional flow area will decrease the fluid inertance of a given line, and decreasing its cross-sectional flow area will increase its fluid inertance. As shown in Figure 2B, the respective lengths L1' and L2' of first and second cylinder lines 68' and 70' are different, but through application of the inventive method the fluid inertances of cylinder lines 68', 70' are made substantially equivalent by increasing the inner diameter of longer second line 70' from original, first flow area or first diameter D1 to larger, second flow area or second diameter D2 to yield modified second cylinder line 270' of Figure 4, which depicts second embodiment altered pair of cylinder lines 257 resulting from application of the inventive method.

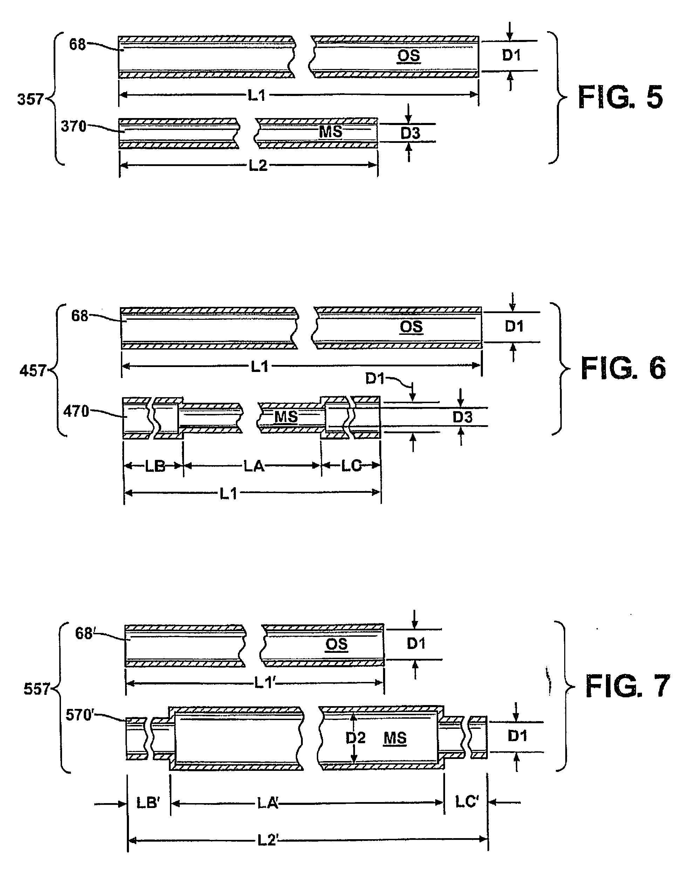

Should the "stable" first cylinder line 68 be the longer, and the "unstable" second cylinder line 70 be the shorter of the pair of cylinder lines, as illustrated in Figure 2A, and it not be possible or desirable to lengthen second cylinder line 70 from length L2 to match length L1 as in first embodiment altered cylinder line pair 157 shown in Figure 3, then the inner diameter of shorter, second line 70 may be reduced from its original first flow area or first diameter D1 to a smaller, third flow area or third diameter D3 as shown in Figure 5, which illustrates third embodiment pair of altered cylinder lines 357 resulting from application of the inventive method, which includes original first cylinder line 68 and modified second cylinder line 370.

A changed flow area of the second cylinder line 70, 70' need not be constant or over its entire length in order to substantially match its fluid inertance to that of first cylinder line 68, 68'. Referring to Figure 6, there is shown fourth embodiment altered pair of cylinder lines 457 resulting from the inventive method applied to a pair of lines wherein first line 68 is the longer of the two, and modified second line 470 is the shorter, i.e., their original states may be as lines 68, 70 illustrated in Figure 2A. In Figure 6, the second line length L2 of modified second cylinder line 470 includes a modified middle segment or portion LA disposed between opposite end segments or portions LB and LC. The overall length L2 of modified second line 470 shown in Figure 6 may be substantially unchanged from that of original state second line 70 shown in Figure 2A. In modified second line 470, the flow area or inner diameter of middle portion LA has been reduced from original first flow area or diameter D1 to smaller third flow area or diameter D3. In cylinder line pair 457, first flow area or first diameter D1 of portions LB and LC of modified second line 470, and of first line 68, remains unaltered, and in second line 470 the length and flow area of segment LA may be proportionally varied in substantially matching the fluid inertance of modified second line 470 to that of first line 68. Additionally, the lengths of end segments LB and LC maintained at original first flow area or first diameter D1 may be varied and their fluid inertances summed with that of middle segment LA to substantially match the total fluid inertance of modified second cylinder line 470 to that of first cylinder line 68.

Referring now to Figure 7, there is shown a fifth embodiment altered pair of cylinder lines 557 resulting from application of the inventive method. Of cylinder line pair 557, first line 68' is the shorter and modified second line 570' is the longer, i.e., their original states may be as lines 68', 70' illustrated in Figure 2B. In Figure 7, the second line length L2' of second cylinder line 570' includes modified middle segment or portion LA' disposed between opposite end segments or portions LB and LC. The overall length L2' of modified second line 570' may be substantially unchanged from that of second line 70' in its original state (OS) shown in Figure 2B. The flow area or inner diameter of modified middle portion LA' has been increased from original first flow area or first diameter D1 to larger second flow area or diameter D2. In cylinder line pair 557, the first flow area or first inner diameter D1 of portions LB' and LC' of modified second line 570', and of first line 68', remains unaltered, and in second line 570' the length and flow area of segment LA' may be proportionally varied in substantially matching the fluid inertance of modified second line 570' to that of first line 68'. Additionally, the lengths of end segments LB' and LC' maintained at original first diameter D1 may be varied and their fluid inertances summed with that of middle segment LA' to substantially match the total fluid inertance of modified second cylinder line 570' to that of first cylinder line 68'.

The altered pairs of cylinder lines shown in Figures 6 and 7, wherein the first diameters D1 of end segments LB, LC, LB', LC' of modified second lines 470 and 570' remain unchanged from original state second lines 70, 70', and which include original state first lines 68, 68' also of first diameter D1, eliminate the need for port size changes at the connections to cylinder 14 or valve 30, which could impact the manufacture of a steering gear. For instance, maintaining original, first diameter D1 at the opposite ends of lines 68, 68' and 470, 570' facilitates their common use of existing tube fittings 60, 62, 64, 66 and their mating receiving ports provided in cylinder 14 and valve 30.

Lastly, if instability is present in both turning directions, the designer need only find a stable frequency or cylinder line configuration for system 10, and then adjust the dimensions of right hand and/or left hand cylinder line 50, 52, and thus their resulting fluid inertances, until steering stability is achieved.

While the invention has been described with reference to exemplary embodiments or alternatives, it will be understood by those skilled in the art that various changes can be made and equivalents can be substituted for elements or steps thereof without departing from the scope of the invention. In addition, many modifications can be made to adapt a particular situation, method or material to the teachings of the invention without departing from the essential scope thereof. Therefore, it is intended that the invention not be limited to the particular embodiments or practices disclosed for carrying out this invention, but that the invention will include all embodiments or alternatives falling within the scope of the appended claims.

## Claims

1. A method for reducing steering instability in a hydraulic power steering system (10) for a vehicle having a pair of cylinder lines (50, 52) through which hydraulic fluid is conveyed in assisting turning a vehicle wheel (26, 28, 36), comprising the steps of:

   determining which (68, 68') of said pair of cylinder lines (50, 52) results in less steering instability when the vehicle wheel (26, 28, 36) is turned;
   calculating the fluid inertance of the hydraulic fluid conveyed through the cylinder line (68, 68') that results in less steering instability; and
   altering at least one dimension (L2, L2', D1) of the cylinder line (70, 70') that results in greater steering instability when the vehicle wheel (26, 28, 36) is turned to substantially match the fluid inertance thereof to the calculated fluid inertance.

2. The method of claim 1, wherein the vehicle wheel is a hand wheel (36).

3. The method of claim 1, wherein the vehicle wheel is a road wheel (26, 28).

4. The method of claim 1, wherein both of the pair of cylinder lines (50, 52) have a common first cross sectional size (D1) over substantially their entire respective lengths (L1, L1', L2, L2', LR, LL), and said step of altering comprises changing the length (L2, L2') of the cylinder line (70, 70') that results in greater steering instability when the vehicle wheel (26, 28, 36) is turned.

5. The method of claim 4, wherein said step of altering comprises lengthening the cylinder line (70, 70') that results in greater steering instability when the vehicle wheel (26, 28, 36) is turned.

6. The method of claim 4, wherein said step of altering comprises shortening the cylinder line (70, 70') that results in greater steering instability when the vehicle wheel (26, 28, 36) is turned.

7. The method of claim 1, wherein said step of altering comprises changing the flow area of the cylinder line (70, 70') that results in greater steering instability when the vehicle wheel (26, 28, 36) is turned.

8. The method of claim 1, wherein the pair of cylinder lines includes a first cylinder line (68, 68') having an overall length (L1, L1', LL, LR) and a first diameter (D1), and a second cylinder line (70, 70') having a second line length (L2, L2'), and said step of altering comprises changing the diameter of the second cylinder line (70, 70') over a second line length (L2, L2') thereof from the first diameter (D1) to one of a second diameter (D2) larger than the first diameter (D1) and a third diameter (D3) smaller than the first diameter (D1).

9. The method of claim 8, wherein the second line length (L2, L2') is the overall length (LL, LR) of the second cylinder line (70, 70').

10. The method of claim 8, wherein the second cylinder line (70, 70') additionally has first and second opposite end segments (LB, LC, LB', LC') respectively disposed at opposed ends of a middle segment (LA, LA') over which the second line length (L2, L2') extends, and further comprising the step of maintaining the first and second opposite end segments (LB, LC, LB', LC') at the first diameter (D1).

**Patentansprüche**

1. Verfahren zum Verringern von Lenkinstabilität in einem hydraulischen Servolenksystem (10) für ein Fahrzeug, das ein Paar Zylinderleitungen (50, 52) aufweist, durch die Hydraulikfluid bei der Unterstützung eines Einschlagens eines Fahrzeugrades (26, 28, 36) gefördert wird, mit den Schritten, dass:

> ermittelt wird, welche (68, 68') von dem Paar Zylinderleitungen (50, 52) zu weniger Lenkinstabilität führt, wenn das Fahrzeugrad (26, 28, 36) eingeschlagen wird;
> die Fluidträgheit des Hydraulikfluids, das durch die Zylinderleitung (68, 68'), die zu weniger Lenkinstabilität führt, befördert wird, berechnet wird; und
> zumindest eine Abmessung (L2, L2', D1) der Zylinderleitung (70, 70'), die zu größerer Lenkinstabilität führt, wenn das Fahrzeugrad (26, 28, 36) eingeschlagen wird, verändert wird, um die Fluidträgheit davon im Wesentlichen an die berechnete Fluidträgheit anzupassen.

2. Verfahren nach Anspruch 1,
wobei das Fahrzeugrad ein Lenkrad (36) ist.

3. Verfahren nach Anspruch 1,
wobei das Fahrzeugrad ein Laufrad (26, 28) ist.

4. Verfahren nach Anspruch 1,
wobei beide von dem Paar Zylinderleitungen (50, 52) eine gemeinsame erste Querschnittsgröße (D1) über im Wesentlichen ihre gesamten jeweiligen Längen (L1, L1', L2, L2', LR, LL) aufweisen, und der Schritt des Veränderns umfasst, dass die Länge (L2, L2') der Zylinderleitung (70, 70'), die zu größerer Lenkinstabilität führt, wenn das Fahrzeugrad (26, 28, 36) eingeschlagen wird, geändert wird.

5. Verfahren nach Anspruch 4,
wobei der Schritt des Veränderns umfasst, dass die Zylinderleitung (70, 70'), die zu größerer Lenkinstabiltät führt, wenn das Fahrzeugrad (26, 28, 36) eingeschlagen wird, verlängert wird.

6. Verfahren nach Anspruch 4,
wobei der Schritt des Veränderns umfasst, dass die Zylinderleitung (70, 70'), die zu größerer Lenkinstabilität führt, wenn das Fahrzeugrad (26, 28, 36) eingeschlagen wird, verkürzt wird.

7. Verfahren nach Anspruch 1,
wobei der Schritt des Veränderns umfasst, dass die Durchflussfläche der Zylinderleitung (70, 70'), die zu größerer Lenkinstabilität führt, wenn das Fahrzeugrad (26, 28, 36) eingeschlagen wird, geändert wird.

**8.** Verfahren nach Anspruch 1,
wobei das Paar Zylinderleitungen eine erste Zylinderleitung (68, 68') mit einer Gesamtlänge (L1, L1', LL, LR) und einem ersten Durchmesser (D1) und eine zweite Zylinderleitung (70, 70') mit einer zweiten Leitungslänge (L2, L2') umfasst, und der Schritt des Veränderns umfasst, dass der Durchmesser der zweiten Zylinderleitung (70, 70') über eine zweite Leitungslänge (L2, L2') davon von dem ersten Durchmesser (D1) auf einen von einem zweiten Durchmesser (D2), der größer als der erste Durchmesser (D1) ist, und einem dritten Durchmesser (D3), der kleiner als der erste Durchmesser (D1) ist, geändert wird.

**9.** Verfahren nach Anspruch 8,
wobei die zweite Leitungslänge (L2, L2') die Gesamtlänge (LL, LR) der zweiten Zylinderleitung (70, 70') ist.

**10.** Verfahren nach Anspruch 8,
wobei die zweite Zylinderleitung (70, 70') zusätzlich erste und zweite entgegengesetzte Endsegmente (LB, LC, LB', LC') aufweist, die jeweils an entgegengesetzten Enden eines Mittelsegments (LA, LA'] angeordnet sind), über die sich die zweite Leitungslänge (L2, L2') erstreckt, und das ferner den Schritt umfasst, dass die ersten und zweiten entgegengesetzten Endsegmente (LB, LC, LB', LC') auf dem ersten Durchmesser (D1) gehalten werden.

**Revendications**

**1.** Procédé pour réduire l'instabilité de direction dans un système de direction assistée hydraulique (10) pour un véhicule ayant une paire de conduits de cylindres (50, 52) à travers lesquels du fluide hydraulique est convoyé pour faire tourner avec assistance une roue de véhicule (26, 28, 36), comprenant les étapes consistant à :

déterminer lequel des conduits de cylindre (68, 68') de ladite paire de conduits de cylindres (50, 52) donne en résultat une plus faible instabilité de direction quand la roue de véhicule (26, 28, 36) est tournée ;
calculer l'inertie fluidique du fluide hydraulique convoyé à travers le conduit de cylindre (68, 68') qui donne en résultat la plus faible instabilité de direction ; et
faire varier au moins une dimension (L2, L2', D1) du conduit de cylindre (70, 70') qui donne en résultat la plus forte instabilité de direction quand la roue de véhicule (26, 28, 36) est tournée pour accorder sensiblement l'inertie fluidique de celui-ci avec l'inertie fluidique calculée.

**2.** Procédé selon la revendication 1, dans lequel la roue de véhicule est un volant (36).

**3.** Procédé selon la revendication 1, dans lequel la roue de véhicule est une roue de déplacement au sol (26, 28).

**4.** Procédé selon la revendication 1, dans lequel les deux conduits de la paire de conduits de cylindres (50, 52) ont une première taille en section transversale (B1) commune sensiblement sur la totalité de leur longueur respective (L1, L1', L2, L2', LR, NL), et ladite étape de variation comprend de changer la longueur (L2, L2') du conduit de cylindre (70, 70') qui donne en résultat une plus grande instabilité de direction quand la roue de véhicule (26, 28, 36) est tournée.

**5.** Procédé selon la revendication 4, dans lequel ladite étape de variation comprend d'allonger le conduit de cylindre (70, 70') qui donne en résultat la plus grande instabilité de direction quand la roue de véhicule (26, 28, 36) est tournée.

**6.** Procédé selon la revendication 4, dans lequel ladite étape de variation comprend de raccourcir le conduit de cylindre (70, 70') qui donne en résultat la plus grande instabilité de direction quand la roue de véhicule (26, 28, 36) est tournée.

**7.** Procédé selon la revendication 1, dans lequel ladite étape de variation comprend de changer l'aire d'écoulement du conduit de cylindre (70, 70') qui donne en résultat la plus forte instabilité de direction quand la roue de véhicule (26, 28, 36) est tournée.

**8.** Procédé selon la revendication 1, dans lequel la paire de conduits de cylindre inclut un premier conduit de cylindre (68, 68') ayant une longueur totale (L1, L1', LL, LR) et un premier diamètre (D1), et un second conduit de cylindre (70, 70') ayant une seconde longueur de conduit (L2, L2'), et ladite étape de variation comprend de changer le diamètre du second conduit de cylindre (70, 70') sur une seconde longueur (L2, L2') de celui-ci depuis le premier diamètre (D1) à un parmi un second diamètre (D2) plus grand que le premier diamètre (D1) et un troisième diamètre (D3) plus petit que le premier diamètre (D1).

9. Procédé selon la revendication 8, dans lequel la seconde longueur de conduit (L2, L2') est la longueur totale (LL, LR) du second conduit de cylindre (70, 70').

10. Procédé selon la revendication 8, dans lequel le second conduit de cylindre (70, 70') comporte additionnellement un premier et un second segment terminal opposés (LB, LC, LB', LC') respectivement disposés à des extrémités opposées d'un segment médian (LA, LA') sur lequel s'étend la longueur (L2, L2') du second conduit, et comprend en outre l'étape consistant à maintenir le premier et le second segment terminal opposés (LB, LC, LB', LC') au premier diamètre (D1).

# FIG. 1

FIG. 2A
PRIOR ART

FIG. 2B
PRIOR ART

FIG. 3

FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5495711 A, Kalkman

- US 4828068 A, Wendler